# EUROPEAN PATENT SPECIFICATION

(11) **EP 3 657 648 B1**
(45) Date of publication and mention of the grant of the patent: **15.11.2023**
(21) Application number: 17917981.7
(22) Date of filing: 18.07.2017
(51) Int. Cl.: H02K 11/33, H02K 5/22, H02K 1/2733, H02K 7/14, H02K 1/27, H02K 1/14

(54) **ELECTRIC MOTOR AND VENTILATION FAN**
ELEKTROMOTOR UND LÜFTUNGSGEBLÄSE
MOTEUR ÉLECTRIQUE ET SOUFFLERIE DE VENTILATION

(43) Date of publication of application: 27.05.2020
(73) Proprietor: Mitsubishi Electric Corporation, Chiyoda-ku Tokyo 100-8310 (JP)
(72) Inventor: NAKAMURA, Takuya, Tokyo 100-8310 (JP); OKADA, Junji, Tokyo 100-8310 (JP)
(74) Representative: Witte, Weller & Partner Patentanwälte mbB
(86) International application number: PCT/JP2017/025961
(87) International publication number: WO 2019/016866

(56) References cited:
- EP-A2- 0 561 587
- WO-A1-2012/008135
- WO-A1-2013/157035
- CN-A- 104 247 225
- DE-U1- 9 112 159
- JP-B2- 4 537 331
- US-A- 5 793 131
- US-A1- 2013 057 095

## Description

### Field

The present invention relates to a motor provided with a lead wire for supplying power from outside to the motor, and a ventilation fan.

### Background

A DC (Direct Current) brushless motor as a motor includes a stator having an iron core and a winding, a rotor disposed inside the stator, a shaft connected to the rotor, a bearing supporting the shaft to allow rotation of the shaft, a terminal block provided in the stator, and a lead wire for supplying power from outside to the motor. For a motor disclosed in Japanese Patent No. 5805308, a binding band is used to secure the lead wire to the terminal block. Document US 2013/057095 A1, according to its abstract, states that a brushless motor includes a stator having a stator core, a rotor, a circuit board, a board holder for holding the circuit board, a motor housing having a notch at an opening, and a housing cover. The motor housing accommodates the stator, the rotor, and the board holder to which the circuit board is mounted, and the motor housing is sealed with the housing cover. The board holder includes a board mount section, a lead-wire holder for holding lead-wires. The lead-wire holder is placed at the notch of the motor housing. The lead-wires extend from the circuit board mounted to the board mount section to the outside of the motor housing via the lead-wire holder. Document US 5 793 131 A, according to its abstract, states systems and apparatus for integrating an air switch and a power cord into an electric motor, and methods for assembling an electric motor including an integral air switch and an integral power cord, are described. In one embodiment, an air switch and a power cord are incorporated into an electric motor. No additional removable cover is required for the switch and cord. To eliminate the motor centrifugal switch, an air switch is provided to control energization and de-energization of the motor windings. The air switch includes a snap action switch to cut-out the start winding used for ensuring that the rotor has sufficient starting torque. Document EP 0 561 587 A2, according to its abstract, states that a two compartment motor has a frame, a pair of end shields disposed adjacent opposing ends of the frame to define a first compartment, a stator winding supported by the frame within the first compartment, an armature rotatably supported by the end shields and disposed within the first compartment adjacent the stator winding, a cover mounted to the motor adjacent one of the end shields to define a second compartment between the cover and the end shield, and a control plate mounted within the second compartment. The control plate serves as a mounting surface for securing a plurality of electrical components used in the control and operation of the motor in position within the second compartment. The control plate is a molded plastic component having integrally formed mounting mechanisms for at least one of the electrical components. The electrical components may include a starting capacitor, voltage and/or speed control switches, an overload device and electrical terminals. Ventilation openings, lead openings and shields may also be integrally formed in the control plate. The plate may be provided with recesses to accommodate electrical connectors, a centrifugal switch and other components. A method of assembling the motor includes mounting the plurality of components to the control plate to form a sub-assembly prior to connecting this sub-assembly to the other components of the motor. Document CN 104 247 225 A, according to its abstract, states an electric motor equipped with: a stator; a rotor that rotates together with a rotary shaft in response to a rotating magnetic field generated by a coil wound on the teeth parts of the stator; a terminal block arranged on the coil of the stator with a gap therebetween, with three lead wires connected to the terminal block; and a protective tube in which the three lead wires are inserted. The protective tube is affixed to a tube-fastening part of the terminal block with a binding band.

### Summary

### Technical Problem

Unfortunately, the motor disclosed in Japanese Patent No. 5805308 suffers from a problem of having the increased number of components and requiring more workload because of the use of the binding band for securing the lead wire.

The present invention has been achieved in view of the above problems, and an object of the present invention is to provide a motor capable of reducing the number of components required for securing a lead wire and reducing workload.

### Solution to Problem

In order to solve the above problems and achieve the object, the present invention is directed to providing a motor according to independent claim 1. The motor comprising: a cylindrical stator; a rotor disposed inside the stator; a shaft connected to the rotor and extending along a center axis of the stator; a board case provided at one end of the stator in a direction along the center axis of the stator; a circuit board provided in the direction along the center axis of the stator oppositely to the stator with the board case being interposed between the circuit board and the stator in the direction along the center axis of the stator; a connecting portion provided on a mounting surface of the circuit board, the circuit board having another surface facing the stator in the direction along the center axis of the stator and being opposite to the mounting surface of the circuit board; a lead wire connected to the connecting portion; and a protection tube to cover a circumference of the lead wire. The board case has a first holding portion and a second holding portion that are formed thereon, wherein the first holding portion is in a square U-shape having a facing surface, as viewed along the center axis of the stator, and the second holding portion is in a square U-shape having a facing surface, as viewed along the center axis of the stator, the first holding portion protruding above the mounting surface out of the circuit board, the second holding portion protruding above the mounting surface out of the circuit board, the facing surface of the second holding portion facing the facing surface of the first holding portion. The protection tube is sandwiched and held between the first holding portion and the second holding portion and as viewed along the center axis of the stator, a width of the facing surface of the second holding portion is smaller than a width of the facing surface of the first holding portion. The circuit board has a cutout formed therethrough in the direction along the center axis to allow the first holding portion and the second holding portion to pass through the cutout.

### Advantageous Effects of Invention

The motor according to the present invention has an effect of reducing the number of components required for securing the lead wire and reducing the workload.

### Brief Description of Drawings

FIG. 1 is an exploded view of a DC brushless motor that is a motor according to a first embodiment of the present invention.
FIG. 2 is a plan view of a circuit board according to the first embodiment as viewed from a mounting surface side of the circuit board.
FIG. 3 is a plan view of a board case according to the first embodiment.
FIG. 4 is a cross-sectional view taken along line IV-IV in FIG. 3.
FIG. 5 is a cross-sectional view taken along line V-V in FIG. 3.
FIG. 6 is a plan view illustrating a state where the circuit board is secured to the board case according to the first embodiment.
FIG. 7 is a plan view illustrating a first modification to the board case according to the first embodiment.
FIG. 8 is a plan view illustrating a second modification to the board case according to the first embodiment.
FIG. 9 is a cross-sectional view of a ventilation fan having the DC brushless motor according to the first embodiment mounted therein.

### Description of Embodiments

A motor and a ventilation fan according to embodiments of the present invention will be described in detail below with reference to the accompanying drawings. The present invention is not limited to the embodiments.

### First embodiment

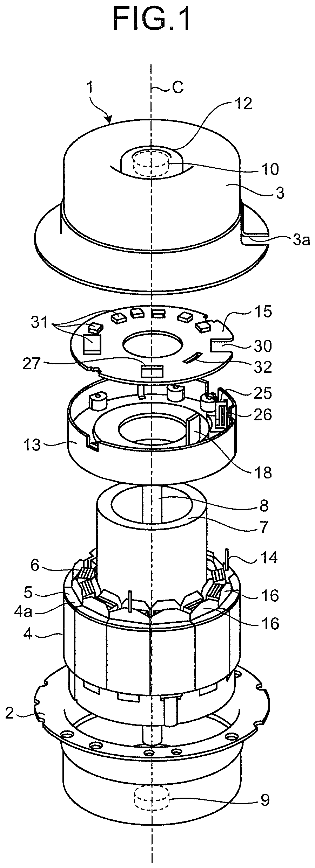

FIG. 1 is an exploded view of a DC brushless motor that is a motor according to a first embodiment of the present invention. A motor, or a DC brushless motor 1 includes components accommodated in a casing defined by a frame 2 and a bracket 3. The frame 2 is in the form of a cylinder having a lower bottom and is made of metal. The bracket 3 is in the form of a cylinder having a top face and is made of metal. The bracket 3 has a pull-out opening 3a formed therein. The pull-out opening 3a allows a lead wire described later to be pulled out from the inside of the bracket 3 to outside therethrough.

A cylindrical stator 4 is press-fitted into the frame 2. The stator 4 is formed by an iron core 5 and a coil 6 wound around the iron core 5 via an insulator 16. The stator 4 is provided with an output pin 14.

An annular rotor 7 is disposed inside the stator 4. A shaft 8 extending along a center axis C of the stator 4 is connected to the rotor 7. The shaft 8 has its one end protruding out of the frame 2.

The shaft 8 has a frame-side part located on a side of the frame away from a point of connection between the shaft 8 and the rotor 7. A second bearing 9 is provided on the frame-side part of the shaft 8. The shaft 8 also has a bracket-side part located on a side of the bracket 3 away from the point of connection between the shaft 8 and the rotor 7. A first bearing 10 is provided on the bracket-side part of the shaft 8. Each of the bearings 9 and 10 holds the shaft 8 in such a manner that the shaft 8 can rotate on the center axis C. The second bearing 9 is held in a housing formed in the frame 2. The first bearing 10 is held in a housing 12 formed in the bracket 3.

The stator has one end 4a in a direction along the center axis C. A board case 13 is secured to the one end 4a of the stator 4. A circuit board 15 is provided oppositely to the stator 4 with the board case 13 being interposed therebetween.

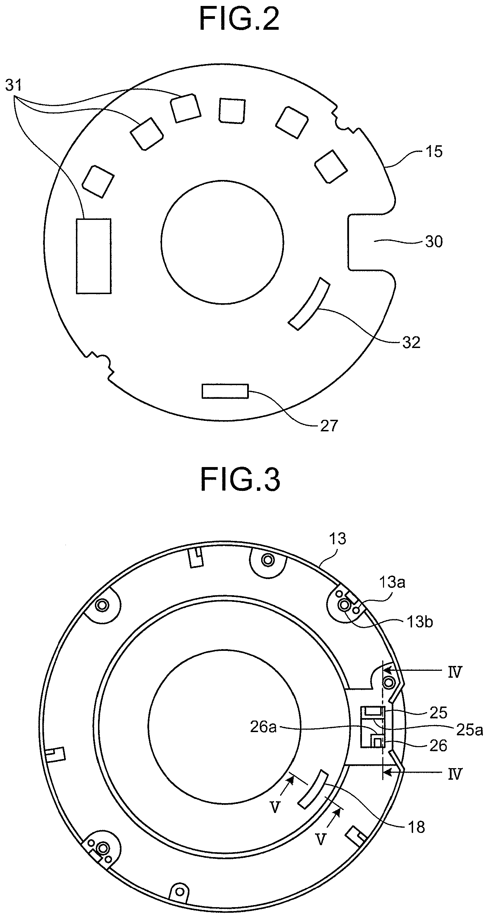

FIG. 2 is a plan view of the circuit board 15 according to the first embodiment as viewed from the side of a mounting surface 15a of the circuit board 15. Electronic components 31 are mounted on the mounting surface 15a. The circuit board 15 has a surface facing the stator 4 and opposite to the mounting surface 15a. The electronic components 31 has a function of a driver unit, a control unit, or a power supply unit. The driver unit uses, for example, a three-phase bridge driver defined by a combination of a motor driver IC and six discrete elements of an IGBT (Insulated Gate Bipolar Transistor) or a one-chip inverter IC (Integrated Circuit). The control unit uses, for example, a microcomputer or a PLC (Programmable Logic Controller).

The circuit board 15 has a cutout 30 formed therethrough. The board case 13 has a first and second holding portions 25 and 26 formed thereon, as will be described later. The cutout 30 allows the first and second holding portions 25, 26 to pass therethrough. The cutout 30 may be of any type that allows the first and second holding portions 25, 26 to pass therethrough. For example, the cutout 30 may be a hole.

The circuit board 15 has a through hole 32 formed therethrough. The board case 13 has a supporting portion 18 formed thereon, as will be described later. The through hole 32 allows the supporting portion 18 to pass therethrough. Further, the circuit board 15 has a connecting portion 27 formed thereon. The connecting portion 27 is a connector to which a lead wire as will be described later is to be connected.

Referring back to FIG. 1, the output pin 14 of the stator 4 extends through a through hole (not illustrated) formed in the board case 13 and protrudes out of the board case 13 above the mounting surface 15a. The output pint 14 is electrically conductively connected to the circuit board 15 by soldering or the like.

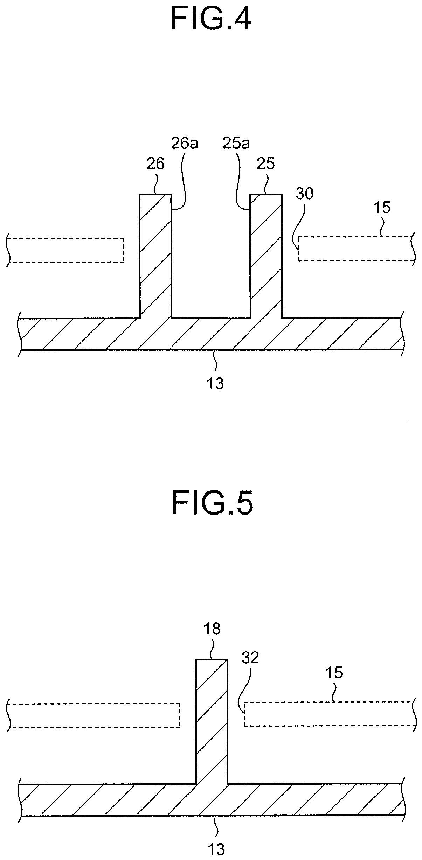

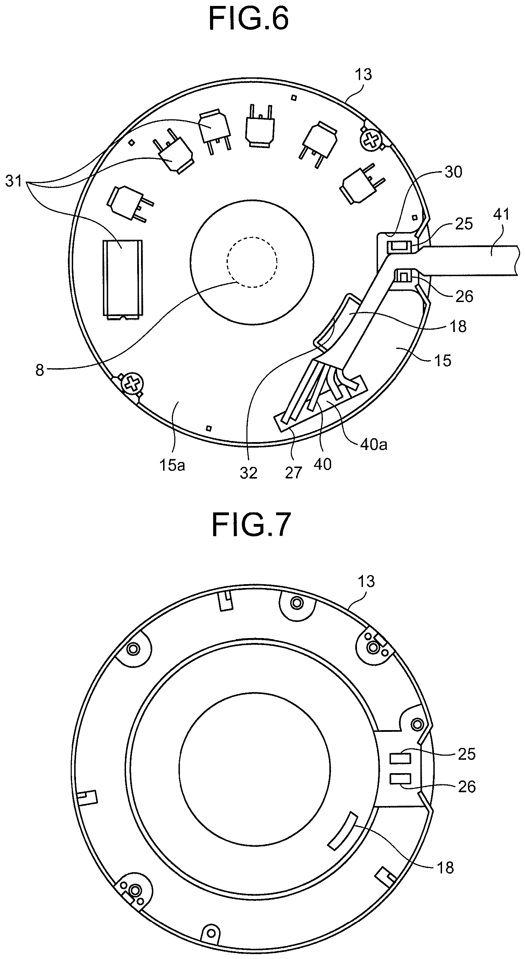

FIG. 3 is a plan view of the board case 13 according to the first embodiment. FIG. 4 is a cross-sectional view taken along line IV-IV of FIG. 3. FIG. 5 is a cross-sectional view taken along line V-V of FIG. 3. FIG. 6 is a plan view illustrating a state where the circuit board 15 is secured to the board case 13 according to the first embodiment. In FIGS. 4 and 5, the circuit board 15 is illustrated by a broken line as the circuit 15 is secured to the board case 13.

The board case 13 has a protrusion 13a that positions the circuit board 15. The board case 13 also has a lower screw hole 13b formed therein. The circuit board 15 positioned by the protrusion 13a is secured with a screw being screwed into the lower hole 13b, such that the circuit board 15 is secured to and positioned on the board case 13.

The board case 13 has the first holding portion 25 and the second holding portion 26 that are formed thereon. The first holding portion 25 protrudes above the mounting surface 15a out of the circuit board 15 secured to the board case 13. The second holding portion 26 protrudes above the mounting surface 15a out of the circuit board 15 and faces the first holding portion 25. As illustrated in FIG. 6, the second holding portion 26 is formed at a closer position to the connecting portion 27 than the first holding portion 25.

The first holding portion 25 is in a square U-shape having a facing surface 25a, as viewed along the center axis C. The second holding portion 26 is in a square U-shape having a facing surface 26a, as viewed along the center axis C. The facing surface 25a of the first holding portion 25 and the facing surface 26a of the second holding portion 26 face each other. As viewed along the center axis C, the width of the facing surface 26a of the second holding portion 26 is smaller than the width of the facing surface 25a of the first holding portion 25.

The board case 13 has the supporting portion 18 formed thereon, and the supporting portion 18 protrudes above the mounting surface 15a out of the circuit board 15 secured to the board case 13.

As illustrated in FIG. 6, a connector 40a provided at an end of a lead wire 40 is connected to the connecting portion 27 of the circuit board 15. The lead wire 40 is routed on the mounting surface 15a of the circuit board 15 and is pulled out to outside of the bracket 3 through the pull-out opening 3a formed in the bracket 3. The circumference of the lead wire 40 is covered by a protection tube 41. In the DC brushless motor 1, power is supplied from an external power source to the coil 6 via the lead wire 40 in response to a control instruction from a control unit (not illustrated), so that driving torque for rotating the rotor 7 is generated.

With the board case 13 and the circuit board 15 being accommodated in the casing defined by the frame 2 and the bracket 3, the first holding portion 25 and the second holding portion 26 are disposed facing the pull-out opening 3a. Therefore, the lead wire 40 and the protection tube 41 have a part pulled out through the pull-out opening 3a, and such a part passes near the first holding portion 25 and the second holding portion 26. Accordingly, the protection tube 41 can be pushed into a gap between the facing surface 25a of the first holding portion 25 and the facing surface 26a of the second holding portion 26. As the protection tube 41 is sandwiched and thus held between the facing surface 25a and the facing surface 26a, the lead wire 40 and the protection tube 41 are secured. It is therefore unnecessary to use any component such as a binding band for securing the lead wire 40, thereby reducing the number of components and workload. Further, because the lead wire 40 is secured by the first holding portion 25 and the second holding portion 26, stress is hardly applied to the connector 40a when an external force is applied to the lead wire 40, and thus connection between the connector 40a and the connecting portion 27 is stably maintained.

As described above, the width of the facing surface 26a of the second holding portion 26 is smaller than the width of the facing surface 25a of the first holding portion 25, as viewed along the center axis C. The second holding portion 26 provided closer to the connecting portion 27 than the first holding portion 25 comes into contact with the protection tube 41 from an inner side of a bending portion of the lead wire 40. If the width of the opposed surface 26a of the second holding portion 26 is large, the distance by which the lead wire 40 pulled in through the pull-out opening 3a should extend before bending would be long, which in case the lead wire 40 may need to sharply bend toward the connecting portion 27. In contrast, in the first embodiment, the width of the opposed surface 26a formed in the second holding portion 26 is smaller than the width of the facing surface 25a of the first holding portion 25. As a result, the distance by which the lead wire 40 pulled in from the pull-out opening 3a should extend before bending is shorter, so that the lead wire 40 can gently bend. Accordingly, disconnection of the lead wire 40 caused by the sharp bending hardly occurs.

Further, as illustrated in FIG. 6, the supporting portion 18 is provided at a location between the first and second holding portions 25 and 26 and the connecting portion 27 and between the lead wire 40 and the shaft 8. Accordingly, it is possible to prevent the lead wire 40 from being compressed and thus disconnected by the housing 12 of the bracket 3 and the circuit board 15 as the lead wire 40 shifts toward the shaft 8. The shape of the supporting portion 18 is not limited to a circular arc as viewed along the center axis C as illustrated in FIG. 3, and may be rectangular, for example.

Further, in general, the board case 13 is easier to increase in strength than the circuit board 15. By forming the first holding portion 25 and the second holding portion 26 on the board case 13, not on the circuit board 15, it is possible to increase the strength of the first holding portion 25 and the second holding portion 26 and secure the lead wire 40 more reliably.

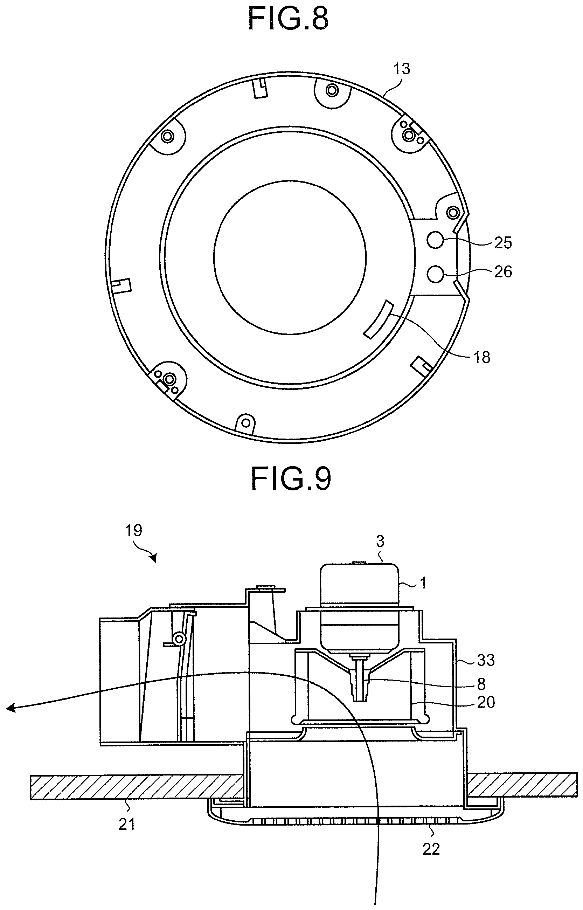

FIG. 7 is a plan view illustrating a first modification to the board case 13 according to the first embodiment. As illustrated in FIG. 7, the first holding portion 25 and the second holding portion 26 may be rectangular as viewed along the center axis C. FIG. 8 is a plan view illustrating a second modification to the board case 13 according to the first embodiment. As illustrated in FIG. 8, the first holding portion 25 and the second holding portion 26 may be circular as viewed along the center axis C.

FIG. 9 is a cross-sectional view of a ventilation fan 19 having the DC brushless motor 1 according to the first embodiment mounted therein. The DC brushless motor 1 is mounted in a casing 33 of the ventilation fan 19. A blower fan 20 is attached to the shaft 8. The casing 33 is installed in an embedded position in a ceiling board 21, and a grille 22 is attached to the casing 33 from below.

When power is supplied to drive the DC brushless motor 1, driving torque is generated to rotate the blower fan 20. When the blower fan 20 is rotated, an air flow represented with the arrow in FIG. 9 is generated.

The configurations described above can be combined with other well-known techniques, and part of each of the configurations can be omitted or modified without departing from the scope of the present invention as defined in the appended claims.

### Reference Signs List

1 DC brushless motor, 2 frame, 3 bracket, 3a pull-out opening, 4 stator, 4a one end, 5 iron core, 6 coil, 7 rotor, 8 shaft, 9 second bearing, 10 first bearing, 12 housing, 13 board case, 14 output pin, 15 circuit board, 15a mounting surface, 16 insulator, 18 supporting portion, 19 ventilation fan, 20 blower fan, 21 ceiling board, 22 grille, 25 first holding portion, 26 second holding portion, 27 connecting portion, 31 electronic component, 32 through hole, 33 casing, 40 lead wire, 41 protection tube.

## Claims

1. A motor (1) comprising:
a cylindrical stator (4);
a rotor (7) disposed inside the stator (4);
a shaft (8) connected to the rotor (7) and extending along a center axis (C) of the stator (4);
a board case (13) provided at one end of the stator (4) in a direction along the center axis (C) of the stator (4) ;
a circuit board (15) provided in the direction along the center axis (C) of the stator (4) oppositely to the stator with the board case (13) being interposed between the circuit board (15) and the stator (4) in the direction along the center axis (C) of the stator (4);
a connecting portion (27) provided on a mounting surface (15a) of the circuit board (15), the circuit board (15) having another surface facing the stator (4) in the direction along the center axis (C) of the stator (4) and being opposite to the mounting surface (15a) of the circuit board (15);
a lead wire (40) connected to the connecting portion; and
a protection tube (41) to cover a circumference of the lead wire (40), **characterised in that**
the board case (13) has a first holding portion (25) and a second holding portion (26) that are formed thereon, wherein the first holding portion (25) is in a square U-shape having a facing surface (25a), as viewed along the center axis (C) of the stator (4), and the second holding portion (26) is in a square U-shape having a facing surface (26a), as viewed along the center axis (C) of the stator (4), the first holding portion (25) protruding above the mounting surface (15a) out of the circuit board (15), the second holding portion (26) protruding above the mounting surface (15a) out of the circuit board (15), the facing surface (26a) of the second holding portion (26) facing the facing surface (25a) of the first holding portion (25), and as viewed along the center axis (C) of the stator (4), a width of the facing surface (26a) of the second holding portion (26) is smaller than a width of the facing surface (25a) of the first holding portion (25),
the protection tube (41) is sandwiched and held between the first holding portion (25) and the second holding portion (26), and
the circuit board (15) has a cutout (30) formed therethrough in the direction along the center axis (C) of the stator (4) to allow the first holding portion (25) and the second holding portion (26) to pass through the cutout (30) .

2. The motor (1) according to claim 1, wherein the board case (13) has a supporting portion (18) formed thereon at a location between the first and second holding portions (25, 26) and the connecting portion (27) and between the lead wire (40) and the shaft (8), the supporting portion (18) protruding above the mounting surface (15a) out of the circuit board (15).

3. The motor (1) according to claim 2, wherein the circuit board (15) has a hole (32) formed therethrough to allow the supporting portion (18) to pass through the hole (32).

4. The motor (1) according to any one of claims 1 to 3, wherein
the second holding portion (26) is formed at a closer position to the connecting portion (27) than the first holding portion (25), and
the first holding portion (25) and the second holding portion (26) have facing surfaces (25a, 26a), the facing surface (25a) of the first holding portion (25) and the facing surface (26a) of the second holding portion (26) facing each other.

5. A ventilation fan (19) comprising:
the motor (1) according to any one of claims 1 to 4; and
a blower fan (20) connected to the shaft (8) of the motor (1).

## Patentansprüche

1. Motor (1), aufweisend:
einen zylindrischen Stator (4);
einen Rotor (7), der innerhalb des Stators (4) angeordnet ist;
eine Welle (8), die mit dem Rotor (7) verbunden ist und sich entlang einer Mittelachse (C) des Stators (4) erstreckt;
ein Leiterplattengehäuse (13), das an einem Ende des Stators (4) in einer Richtung entlang der Mittelachse (C) des Stators (4) vorgesehen ist;
eine Leiterplatte (15), die in der Richtung entlang der Mittelachse (C) des Stators (4) dem Stator gegenüberliegend bereitgestellt ist, wobei das Plattengehäuse (13) zwischen der Leiterplatte (15) und dem Stator (4) in der Richtung entlang der Mittelachse (C) des Stators (4) angeordnet ist;
einen Verbindungsabschnitt (27), der auf einer Befestigungsoberfläche (15a) der Leiterplatte (15) bereitgestellt ist, wobei die Leiterplatte (15) eine andere Fläche aufweist, die dem Stator (4) in der Richtung entlang der Mittelachse (C) des Stators (4) zugewandt ist und gegenüber der Befestigungsoberfläche (15a) der Leiterplatte (15) liegt;
einen Verbindungsleitungsdraht (40), der mit dem Verbindungsabschnitt verbunden ist; und
ein Schutzrohr (41) zum Abdecken eines Umfangs des Verbindungsleitungsdrahts (40), **dadurch gekennzeichnet, dass**
das Leiterplattengehäuse (13) einen ersten Befestigungsabschnitt (25) und einen zweiten Befestigungsabschnitt (26) aufweist, die darauf ausgebildet sind, wobei der erste Befestigungsabschnitt (25) in einer quadratischen U-Form mit einer Stirnfläche (25a) ist, betrachtet entlang der Mittelachse (C) des Stators (4), und der zweite Befestigungsabschnitt (26) in einer quadratischen U-Form mit einer Stirnfläche (26a) ist, betrachtet entlang der Mittelachse (C) des Stators (4), wobei der erste Befestigungsabschnitt (25) oberhalb der Befestigungsoberfläche (15a) aus der Leiterplatte (15) herausragt, der zweite Befestigungsabschnitt (26) oberhalb der Befestigungsfläche (15a) aus der Leiterplatte (15) herausragt, wobei die Stirnfläche (26a) des zweiten Befestigungsabschnitts (26) der Stirnfläche (25a) des ersten Befestigungsabschnitts (25) zugewandt ist und, entlang der Mittelachse (C) des Stators (4) gesehen, eine Breite der Stirnfläche (26a) des zweiten Befestigungsabschnitts (26) kleiner als eine Breite der Stirnfläche (25a) des ersten Befestigungsabschnitts (25) ist,
das Schutzrohr (41) zwischen dem ersten Befestigungsabschnitt (25) und dem zweiten Befestigungsabschnitt (26) angeordnet und gehalten ist, und
die Leiterplatte (15) einen Ausschnitt (30) aufweist, der durch sie hindurch in der Richtung entlang der Mittelachse (C) des Stators (4) ausgebildet ist, um dem ersten Befestigungsabschnitt (25) und dem zweiten Befestigungsabschnitt (26) zu ermöglichen, durch den Ausschnitt (30) hindurch zu ragen.

2. Motor (1) nach Anspruch 1, wobei das Leiterplattengehäuse (13) einen Trägerabschnitt (18) aufweist, der darauf an einem Ort zwischen dem ersten und zweiten Befestigungsabschnitt (25, 26) und dem Verbindungsabschnitt (27) und zwischen dem Verbindungsleitungsdraht (40) und der Welle (8) ausgebildet ist, wobei der Trägerabschnitt (18) oberhalb der Befestigungsoberfläche (15a) aus der Leiterplatte (15) herausragt.

3. Motor (1) nach Anspruch 2, wobei die Leiterplatte (15) ein Loch (32) aufweist, das durch sie hindurch ausgebildet ist, so dass der Trägerabschnitt (18) durch das Loch (32) hindurchragen kann.

4. Motor (1) nach einem der Ansprüche 1 bis 3,
wobei
der zweite Befestigungsabschnitt (26) näher an dem Verbindungsabschnitt (27) ausgebildet ist als der erste Befestigungsabschnitt (25), und
der erste Befestigungsabschnitt (25) und der zweite Befestigungsabschnitt (26) einander zugewandte Flächen (25a, 26a) aufweisen, wobei die Stirnfläche (25a) des ersten Befestigungsabschnitts (25) und die Stirnfläche (26a) des zweiten Befestigungsabschnitts (26) einander zugewandt sind.

5. Ventilator (19), der aufweist:
den Motor (1) nach einem der Ansprüche 1 bis 4; und
ein Gebläse (20), das mit der Welle (8) des Motors (1) verbunden ist.

## Revendications

1. Moteur (1) comprenant :
un stator cylindrique (4) ;
un rotor (7) disposé à l'intérieur du stator (4) ;
un arbre (8) relié au rotor (7) et s'étendant le long d'un axe central (C) du stator (4) ;
un boîtier de carte (13) disposé à une extrémité du stator (4) dans une direction le long de l'axe central (C) du stator (4) ;
une carte de circuit imprimé (15) disposée dans la direction le long de l'axe central (C) du stator (4) à l'opposé du stator, le boîtier de carte (13) étant disposé entre la carte de circuit imprimé (15) et le stator (4) dans la direction le long de l'axe central (C) du stator (4) ;
une partie de connexion (27) disposée sur une surface de montage (15a) de la carte de circuit imprimé (15), la carte de circuit imprimé (15) ayant une autre surface faisant face au stator (4) dans la direction le long de l'axe central (C) du stator (4) et étant opposée à la surface de montage (15a) de la carte de circuit imprimé (15) ;
un fil conducteur (40) connecté à la partie de connexion ; et
un tube de protection (41) destiné à couvrir une circonférence du fil conducteur (40), **caractérisé en ce que**
le boîtier de carte (13) a une première partie de maintien (25) et une seconde partie de maintien (26) qui sont formées sur celui-ci, la première partie de maintien (25) étant en forme de U carré ayant une surface en regard (25a), vue le long de l'axe central (C) du stator (4), et la seconde partie de maintien (26) étant en forme de U carré ayant une surface en regard (26a), vue le long de l'axe central (C) du stator (4), la première partie de maintien (25) faisant saillie au-dessus de la surface de montage (15a) hors de la carte de circuit imprimé (15), la seconde partie de maintien (26) faisant saillie au-dessus de la surface de montage (15a) hors de la carte de circuit imprimé (15), la surface en regard (26a) de la seconde partie de maintien (26) faisant face à la surface en regard (25a) de la première partie de maintien (25), et vue le long de l'axe central (C) du stator (4), une largeur de la surface en regard (26a) de la seconde partie de maintien (26) étant plus petite qu'une largeur de la surface en regard (25a) de la première partie de maintien (25),
le tube de protection (41) est pris en sandwich et maintenu entre la première partie de maintien (25) et la seconde partie de maintien (26), et
la carte de circuit imprimé (15) a une découpe (30) formée à travers celle-ci dans la direction le long de l'axe central (C) du stator (4) pour permettre à la première partie de maintien (25) et à la seconde partie de maintien (26) de passer à travers la découpe (30).

2. Moteur (1) selon la revendication 1, le boîtier de carte (13) ayant une partie de support (18) formée sur celui-ci à un endroit entre les première et seconde parties de maintien (25, 26) et la partie de connexion (27) et entre le fil conducteur (40) et l'arbre (8), la partie de support (18) faisant saillie au-dessus de la surface de montage (15a) hors de la carte de circuit imprimé (15).

3. Moteur (1) selon la revendication 2, la carte de circuit imprimé (15) ayant un trou (32) formé à travers celle-ci pour permettre à la partie de support (18) de passer à travers le trou (32).

4. Moteur (1) selon l'une quelconque des revendications 1 à 3,
la seconde partie de maintien (26) étant formée à une position plus proche de la partie de connexion (27) que la première partie de maintien (25), et
la première partie de maintien (25) et la seconde partie de maintien (26) ayant des surfaces en regard (25a, 26a), la surface en regard (25a) de la première partie de maintien (25) et la surface en regard (26a) de la seconde partie de maintien (26) se faisant face l'une à l'autre.

5. Soufflerie de ventilation (19) comprenant :
le moteur (1) selon l'une quelconque des revendications 1 à 4 ; et
un ventilateur soufflant (20) relié à l'arbre (8) du moteur (1).
